# EUROPÄISCHE PATENTSCHRIFT

(11) **EP 2 025 270 B1**
(45) Veröffentlichungstag und Bekanntmachung des Hinweises auf die Patenterteilung: **12.04.2017**
(21) Anmeldenummer: 08405159.8
(22) Anmeldetag: 19.06.2008
(51) Int. Cl.: A47J 31/44

(54) **Vorrichtung zum Aufschäumen und Erhitzen von Milch**
Device for foaming and heating up milk
Dispositif destiné à faire mousser et chauffer du lait

(30) Priorität: 16.08.2007 CH 12902007
(43) Veröffentlichungstag der Anmeldung: 18.02.2009
(73) Patentinhaber: Cafina AG, 5502 Hunzenschwil (CH)
(72) Erfinder: Schödler, Claudio, CH-5600 Lenzburg (CH)
(74) Vertreter: Rottmann, Maximilian

(56) Entgegenhaltungen:
- EP-A1- 1 949 829
- DE-U1- 29 502 592
- US-A- 4 852 474
- US-A1- 2003 131 735
- US-A1- 2006 272 516

## Beschreibung

Die Erfindung betrifft eine gemäss dem Oberbegriff des Anspruchs 1 ausgebildete Vorrichtung zum Aufschäumen und Erhitzen von Milch, ein Verfahren zum Aufschäumen von Milch gemäss dem Anspruch 12 sowie ein Verfahren zum Erhitzen von Milch gemäss dem Anspruch 14.

Derartige Vorrichtungen kommen insbesondere an oder zusammen mit Espressokaffeemaschinen zum Einsatz. Der mit der Vorrichtung erzeugte Milchschaum wird beispielsweise für die Herstellung von Cappuccino oder Latte Macchiato verwendet, während die erhitzte Milch sowohl für die Zubereitung von Milchkaffee wie auch von heissen Milchgetränken genutzt werden kann.

Bekannte Vorrichtungen weisen üblicherweise ein verschwenkbar angeordnetes Dampfrohr auf, das am Ende mit einer Düse versehen ist, über welche der Dampf austreten kann. Die Dampfabgabe wird mittels eines Drehschalters oder dergleichen gestartet bzw. gestoppt. Zum Erhitzen von Milch wird das Dampfrohr üblicherweise relativ tief in einen mit Milch gefüllten Behälter eingetaucht und die Dampfzufuhr gestartet. Der Erhitzungsvorgang wird nach Gutdünken des Bedieners beendet. Um Milch aufzuschäumen, wird das Dampfrohr nur gerade soweit in die Milch eingetaucht, dass der Dampfstrahl noch Umgebungsluft mitreissen kann, welche letztlich für die Schaumbildung verantwortlich ist. Üblicherweise muss der Bediener den mit Milch gefüllten Behälter während des Aufschäumvorgangs immer wieder etwas anheben und absenken, damit der Dampfstrahl die für eine homogene Schaumbildung benötigte Menge an Luft mitreissen kann. Somit hängt die Qualität des erzeugten Milchschaums massgeblich vom Geschick und Fingerspitzengefühl des Bedieners -Barista- ab. Auch beim Erzeugen von Milchschaum wird der Aufschäumvorgang nach Gutdünken des Bedieners beendet.

Neben diesen einfachen Vorrichtungen sind auch vollautomatische Emulgiereinrichtungen bekannt, bei denen ein mit dem Dampferzeuger verbundener Dampfzufuhrkanal in eine Saugkammer mündet. Diese Saugkammer ist mit einem Milchzufuhrkanal und einem Luftzufuhrkanal verbunden. Durch den Dampfstrom wird in der Saugkammer ein Unterdruck erzeugt, welcher bewirkt, dass Milch über den Milchzufuhrkanal und Luft über den Luftzufuhrkanal in die Saugkammer gesaugt werden. Dieses Dampf-Luft-Milchgemisch wird in einer nachfolgenden Emulgierkammer in eine turbulente Strömung versetzt, so dass eine heisse Emulsion aus Milch und Luft entsteht. Eine derartige Emulgiereinrichtung ist beispielsweise aus der EP-A-0 195 750 bekannt.

Vollautomatische Emulgiereinrichtungen sind jedoch relativ aufwändig und damit teuer in der Herstellung. Zudem sind sie verschmutzungsanfällig, was aufwändige Reinigungsprozesse seitens der Maschine bedingt, da die mit Milch in Berührung kommenden Teile von aussen nicht zugänglich sind und daher nicht manuell gereinigt werden können. Ausserdem sollte die Milch in einem separaten, vorzugsweise gekühlten Fach oder Behälter gelagert werden.

In der DE 602 15 058 T2 ist eine Vorrichtung zum Erwärmen und Aufschäumen von Milch offenbart. Die Vorrichtung umfasst einen Heisswasserbereiter, der über eine erste Leitung -Dampfleitung- mit einer Förderleitung verbunden ist. In der Dampfleitung ist zudem ein Absperrventil angeordnet. Die Förderleitung weist ein offenes Ende auf, welche in ein Milch enthaltendes Gefäss eingetaucht werden kann. Die Vorrichtung umfasst im weiteren eine elektrisch angetriebene Pumpe zum Zuführen von Luft unter Überdruck. Die Pumpe ist über eine zweite Leitung mit der Förderleitung verbunden. Schliesslich ist ein Temperatursensor vorgesehen, der mit dem eintauchbaren Ende der Förderleitung verbunden ist und dem Erfassen der Milchtemperatur dient. Bei einer alternativen Ausbildung ist die Dampfleitung zusätzlich noch mit einer Bypass-Leitung zum Umgehen des Absperrventils versehen.

Aus der EP 1 949 829 A1 ist eine Vorrichtung zum Erhitzen und/oder Aufschäumen eines Getränks wie beispielsweise Milch bekannt. Die Vorrichtung umfasst einen Dampferzeuger (boiler), ein Mischelement, eine erste Leitung mit einem ersten Ventil, eine zur ersten Leitung parallele zweite Leitung mit einem zweiten Ventil sowie eine in der zweiten Leitung angeordnete Venturieinrichtung. Der Venturieinrichtung ist ein Venturiventil zugeordnet, dessen Luftzufuhröffnung mittels einer Kontrolleinrichtung selektiv verschliessbar ist. Bei einer bevorzugten Weiterbildung ist zudem ein mit dem Mischelement verbundenes und an der Kontrolleinrichtung angeschlossenes Thermometer vorgesehen.

Aus der US 2006/272516 A1 ist eine automatische Dampfabgabe-Vorrichtung zur Zubereitung von heissen und/oder aufgeschäumten Getränken bekannt. Die Vorrichtung weist eine erste Leitung für Dampf und eine zweite Leitung für Luft auf. Die endseitig verschlossene Dampfleitung ist im Bereich des Endes mit einer radialen Öffnung versehen. Die im Durchmesser kleinere Luftleitung besitzt einen sich verjüngenden Endbereich mit einer axialen Öffnung. Die genannte Öffnung der Luftleitung ist vor der radialen Öffnung der Dampfleitung angeordnet. Am Ende der einen Leitung ist ein Temperatursensor zum Messen der Temperatur der zu erhitzenden Flüssigkeit angeordnet. Der Temperatursensor ist mit einer elektronischen Kontrolleinheit verbunden. Die Luftleitung ist mit einem ersten Drei-Wege-Elektroventil versehen, während die Dampfleitung mit einem zweiten Drei-Wege-Elektroventil verbunden ist.

Die Aufgabe der Erfindung besteht darin, eine Vorrichtung zum Aufschäumen und Erhitzen von Milch gemäss dem Oberbegriff des Anspruchs 1 derart zu gestalten, dass sie eine gute Qualität des erzeugten Endprodukts, insbesondere des erzeugten Milchschaums sicherstellt und ausserdem die Möglichkeit bietet, Milch zu erwärmen ohne sie dabei aufzuschäumen, wobei die Vorrichtung einfach aufgebaut, leicht zu bedienen und kostengünstig herstellbar sein soll.

Hierzu wird nach der Erfindung eine Vorrichtung bereitgestellt, welche die im Kennzeichen des Anspruchs 1 angeführten Merkmale aufweist.

Bevorzugte Ausführungsbeispiele der Vorrichtung sind in den abhängigen Ansprüchen 2 bis 10 umschrieben.

Im Anspruch 11 ist zudem ein Verfahren zum Aufschäumen von Milch unter Verwendung einer erfindungsgemässen Vorrichtung definiert.

Im Anspruch 12 ist zudem ein Verfahren zum Erhitzen von Milch unter Verwendung einer erfindungsgemässen Vorrichtung definiert, während im Anspruch 13 eine mit einer erfindungsgemäss ausgebildeten Vorrichtung versehene Kaffeemaschine näher beschrieben ist.

Nachfolgend wird ein bevorzugtes Ausführungsbeispiel der Erfindung anhand von Zeichnungen näher erläutert. Dabei zeigt:
- Fig. 1: eine schematische Darstellung der Vorrichtung zum Aufschäumen und Erhitzen von Milch, und
- Fig. 2: einen Querschnitt durch den Vorderteil des Dampfrohrs in vergrösserter Darstellung.

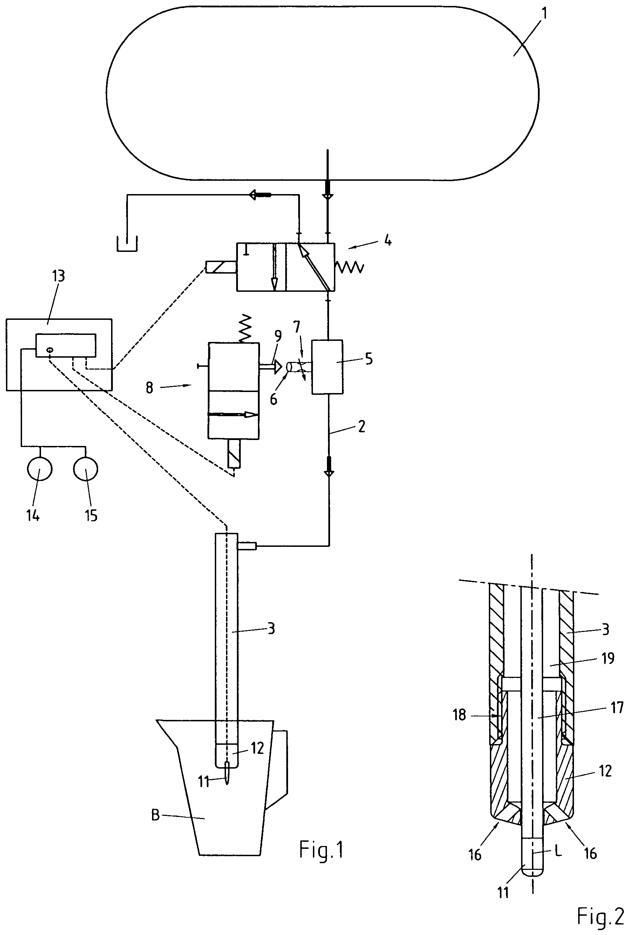

Anhand der Figur 1, welche eine schematische Darstellung der Vorrichtung zum Aufschäumen und Erhitzen von Milch zeigt, soll der grundsätzliche Aufbau der Vorrichtung näher erläutert werden. Die Vorrichtung umfasst einen Dampferzeuger 1, der über eine Dampfleitung 2 mit einem Dampfrohr 3 verbunden ist. In der Dampfleitung 2 ist ein elektromagnetisch betätigbares Ventil 4 angeordnet, auf das stromabwärts eine Venturidüse 5 folgt, welche mit einer Luftzufuhröffnung 6 versehen ist, die selektiv, d.h. in Abhängigkeit der gewünschten Betriebsart verschlossen werden kann. Die Luftzufuhröffnung 6 kann mittels eines elektromagnetischen Betätigungsorgans 8 verschlossen werden, wobei als eigentlicher Verschlussteil ein Verschlusselement 9 vorgesehen ist, welches verschiebbar ist, um die Luftzufuhröffnung 6 zu öffnen bzw. zu verschliessen. Das Verschlusselement 9 des Betätigungsorgans 8 ist mittels einer nicht dargestellten Feder derart belastet, dass es sich im nicht aktivierten Ruhezustand in seiner eingerückten Ruhestellung befindet, während sich das Verschlusselement 9 bei aktiviertem Betätigungsorgan 8 in seiner ausgerückten Wirkstellung befindet, in der die Luftzufuhröffnung 6 verschlossen wird. Im vorliegenden Beispiel befindet sich das Verschlusselement 9 in seiner eingerückten Ruhestellung, in welcher es die Luftzufuhröffnung 6 freigibt.

Die Venturidüse 5 ist mit einer verstellbaren Drossel 7 versehen, mittels welcher die Grösse der Luftzufuhröffnung 6 verstellt werden kann. Durch diese Drossel 7 kann die pro Zeiteinheit angesaugte Menge an Luft und damit insbesondere die Konsistenz des erzeugten Milchschaums variiert werden. Die Drossel 7 kann beispielsweise manuell oder elektromechanisch verstellt werden.

Die Dampfleitung 2 mündet radial in das hintere Ende des Dampfrohrs 3. Das Dampfrohr 3 ist im Bereich des vorderen Endes mit einem Temperatursensor 11 versehen, der das Dampfrohr 3 in axialer Richtung nach vorne überragt. Das vordere Ende des Dampfrohrs 3 bildet ein Düsenkörper 12, der mit mehreren Dampfaustrittsöffnungen versehen ist, wie nachfolgend anhand der Fig. 2 noch erläutert wird.

Die Vorrichtung ist zudem mit einer elektronischen Steuerungseinrichtung 13 versehen, welche elektrisch mit dem Ventil 4, dem Betätigungsorgan 8 sowie dem Temperatursensor 11 verbunden ist. Sofern die Drossel 7 elektromechanisch verstellbar ist, kann sie ebenfalls mit der Steuerungseinrichtung 13 verbunden werden. Zum Starten des Erhitzungs- bzw. Aufschäumvorgangs sind zwei Tasten 14, 15 vorgesehen, welche ebenfalls elektrisch mit der Steuerungseinrichtung 13 verbunden sind. Schliesslich ist ein Behälter B eingezeichnet, der der Aufnahme der zu erhitzenden bzw. aufzuschäumenden Milch dient. Im hier dargestellten, stromlosen Ausgangszustand befindet sich das Ventil 4 in seiner Entlüftungsposition, in der die Dampfleitung 2 mit der Atmosphäre verbunden ist. In der genannten Entlüftungsposition verschliesst das Ventil 4 gleichzeitig auch den Dampfausgang des Dampferzeugers 1.

Die Funktionsweise der Vorrichtung stellt sich wie folgt dar:

### 1. Milch erhitzen

Um Milch zu erhitzen wird die Vorderseite des Dampfrohrs 3 in die im Behälter B aufgenommene Milch (nicht dargestellt) eingetaucht. Das Dampfrohr 3 sollte zumindest so tief in die Milch eingetaucht werden, dass die Dampfaustrittsöffnung bzw. die Austrittsöffnungen einige Zentimeter in die Milch eingetaucht ist/sind, so dass der aus der Düse austretende Dampf keine Umgebungsluft mitreissen kann. Durch Drücken der Taste 14 wird der Erhitzungsprozess gestartet. Dabei öffnet die Steuerungseinrichtung 13 das Ventil 4, wodurch der Dampf aus dem Dampferzeuger 1 über das geöffnete Ventil 4 und die Dampfleitung 2 in das Dampfrohr 3 einströmen und endseitig über deren Düse austreten kann. Die Luftzufuhröffnung 6 der Venturidüse 5 wird durch das Verschlusselement 9 verschlossen, so dass beim Durchströmen von Dampf keine Luft in die Venturidüse 5 eingesaugt wird.

Der aus den Dampfaustrittsöffnungen austretende Dampf erhitzt die Milch, wobei die Milchtemperatur mittels des Temperatursensors 11 kontinuierlich gemessen wird. Sobald die Milch eine vorbestimmte Temperatur, beispielsweise 75°C erreicht hat, wird die Dampfzufuhr automatisch unterbrochen und der Erhitzungsvorgang beendet. Dazu wird das Ventil 4 über die Steuerungseinrichtung 13 geschlossen und die Dampfleitung 2 wieder zu der Atmosphäre hin geöffnet. Die Temperatur, bei der der Erhitzungsvorgang beendet wird, kann üblicherweise vom Bediener innerhalb bestimmter Grenzen eingestellt werden, wobei die maximale Milchtemperatur 90°C nicht überschreiten sollte. Nach Beenden des Erhitzungsvorgangs kann der Vorderteil 12 des Dampfrohrs 3 sowie der axial vorstehende Temperatursensor 11 auf einfache Weise mit einem feuchten Lappen gereinigt werden.

### 2. Milch aufschäumen

Zu Aufschäumen von Milch wird das Dampfrohr 3 in die im Behälter aufgenommene Milch (nicht dargestellt) eingetaucht. Das Dampfrohr 3 sollte wiederum zumindest so tief in die Milch eingetaucht werden, dass die Dampfaustrittsöffnung bzw. die Austrittsöffnungen einige Zentimeter in die Milch eingetaucht sind, so dass der aus dem Düsenkörper 12 austretende Dampf keine Umgebungsluft mitreissen kann. Durch Drücken der Taste 15 wird der Aufschäumvorgang gestartet. Dabei öffnet die Steuerungseinrichtung 13 das Ventil 4, wodurch Dampf aus dem Dampferzeuger 1 über das geöffnete Ventil 4 und die Dampfleitung 2 in das Dampfrohr 3 einströmen und über die in den Düsenkörper 12 eingelassenen Austrittsöffnungen endseitig aus dem Dampfrohr 3 austreten kann. Die Luftzufuhröffnung 6 der Venturidüse 5 bleibt durch das Verschlusselement 9 vorerst verschlossen, so dass beim Durchströmen von Dampf keine Luft in die Venturidüse 5 eingesaugt wird.

Der aus dem Düsenkörper 12 austretende Dampf erhitzt die Milch, wobei die Milchtemperatur mittels des Temperatursensors 11 kontinuierlich gemessen wird. Sobald die Milch eine vorbestimmte Mindesttemperatur, beispielsweise 30°C erreicht hat, wird das Betätigungsorgan 8 aktiviert, so dass dessen Verschlusselement 9 von der Luftzufuhröffnung 6 der Venturidüse 5 abgehoben und die Luftzufuhröffnung 6 freigegeben wird. Bis zu diesem Zeitpunkt wurde die Milch lediglich erwärmt, ohne dass Schaum erzeugt wurde. Nach dem Öffnen der Luftzufuhröffnung 6 wird von dem durch die Venturidüse 5 strömenden Dampf Luft über die Luftzufuhröffnung 6 angesaugt. Da das Prinzip von Venturidüsen seit langem bekannt ist, braucht an dieser Stelle nicht näher darauf eingegangen zu werden. Jedenfalls vermischt sich die eingesaugte Luft in der Venturidüse 5 mit dem Dampf, was zur Folge hat, dass nunmehr ein Dampf-LuftGemisch aus dem Düsenkörper 12 austritt, welches Milchschaum erzeugt. Sobald die Milch eine vorbestimmte Temperatur, beispielsweise 65°C erreicht hat, wird die Dampfzufuhr automatisch unterbrochen und der Aufschäumvorgang beendet. Dazu wird wiederum das Ventil 4 über die Steuerungseinrichtung 13 geschlossen und die Dampfleitung 2 wieder zu der Atmosphäre hin geöffnet. Gleichzeitig wird das Verschlusselement 9 wieder nach hinten in seine Ruhestellung gezogen, so dass die Luftzufuhröffnung 6 der Venturidüse 5 wieder offen ist. Auch in diesem Fall kann die Temperatur, bei der der Aufschäumvorgang beendet werden soll, vom Bediener innerhalb bestimmter Grenzen eingestellt werden, wobei die maximale Milchtemperatur auch hier 90°C nicht überschreiten sollte. Nach Beenden des Aufschäumvorgangs kann der Düsenkörper 12 sowie der axial vorstehende Temperatursensor 11 auf einfache Weise mit einem feuchten Lappen gereinigt werden.

Es hat sich gezeigt, dass es für das Aufschäumen der Milch insbesondere dann vorteilhaft ist, die Milch auf eine vorbestimmte Temperatur zu erwärmen, wenn die Milch zu Beginn des Aufschäumvorgangs noch relativ kalt ist, da bei kalter Milch die Schaumbildung mangelhaft ist bzw. kein homogener Schaum erzeugt werden kann. Da die Milch üblicherweise in einem Kühlschrank oder dergleichen aufbewahrt wird, weist diese zu Beginn des Aufschäumvorgangs in der Regel eine Temperatur in der Grössenordnung von 5°C auf.

Die Steuerungseinrichtung 13 ist vorzugsweise so ausgelegt, dass der jeweilige Erhitzungs- bzw. Schäumvorgang durch Drücken der entsprechenden Taste 14, 15 jederzeit unterbrochen werden kann. Vorzugsweise kann der jeweilige Vorgang auch verlängert werden, sofern innerhalb einer vorbestimmten Zeitdauer, beispielsweise 5 Sekunden, nach Beendigung des Erhitzungs- bzw. Schäumvorgang die entsprechende Taste nochmals gedrückt wird. Dieses nochmalige Drücken der Taste bewirkt in diesem Fall, dass die Milch um eine vorbestimmte Temperaturdifferenz, beispielsweise 3° Celsius, über die vorprogrammierte Solltemperatur hinaus erhitzt wird. Beim Erhitzungsvorgang wird die Milch um die genannte Temperaturdifferenz erhitzt während beim Schäumvorgang ggf. auch noch Luft zugeführt wird.

Die Figur 2 zeigt einen Querschnitt durch den Vorderteil des Dampfrohrs 3 in vergrösserter Darstellung. Das Dampfrohr 3 ist am vorderen Ende mit dem Düsenkörper 12 versehen, der mehrere Dampfaustrittsöffnungen 16 aufweist. Über diese Dampfaustrittsöffnungen 16 kann der Dampf unter einem Winkel zur Längsachse L des Dampfrohrs 3 bzw. des Temperatursensors 11 austreten. Der Austrittswinkel ist so gewählt, dass die Milch vom austretenden Dampf einerseits möglichst homogen erwärmt bzw. aufgeschäumt wird, und dass andererseits der austretende Dampf nicht auf den Temperatursensor 11 trifft, so dass die Temperaturmessung durch den austretenden Dampf nicht beeinflusst wird. Die Längsachse des Temperatursensors 11 verläuft dagegen koaxial zur Längsachse des Dampfrohrs 3. Der Düsenkörper 12 ist am rückwärtigen Ende mit einem Aussengewinde 18 versehen, mittels welchem er am Dampfrohr 3 festgeschraubt ist. Am vorderen Ende weist der Düsenkörper 12 eine zentrale Öffnung auf, welche dem Fixieren des Temperatursensors 11 dient. Der Temperatursensor 11 ist an einem rohrartigen Element 17 befestigt, durch dessen Inneres die elektrischen Anschlussleitungen des Temperatursensors 11 geführt sind. Der Dampf kann durch den ringförmigen Raum 19 zwischen dem rohrartigen Element 17 und der Innenseite des hohlzylindrisch ausgebildeten Dampfrohrs 3 durch das Dampfrohr 3 hindurch zu den Dampfaustrittsöffnungen 16 strömen. Als Temperatursensor kann beispielsweise ein Thermoelement oder ein Heissleiter NTC-Widerstandssensor eingesetzt werden.

Eine derartige Vorrichtung eignet sich insbesondere zur Verwendung an, mit oder in einer Espressokaffeemaschine, wobei das Dampfrohr vorzugsweise schwenkbar und/oder höhenverstellbar an der Kaffeemaschine angeordnet ist.

## Patentansprüche

1. Vorrichtung zum Aufschäumen und Erhitzen von Milch, mit einem Dampferzeuger (1), einem über eine Dampfleitung (2) mit dem Dampferzeuger (1) verbundenen Dampfrohr (3) zum Eintauchen in die Milch, einem am Dampfrohr (3) angeordneten Temperatursensor (11) zum Messen der Milchtemperatur und einer mit dem Temperatursensor (11) verbundenen Steuerungseinrichtung (13), wobei in der Dampfleitung (2) eine Venturidüse (5) angeordnet ist, die mit einer mittels der Steuerungseinrichtung (13) selektiv verschliessbaren Luftzufuhröffnung (6) versehen ist **dadurch gekennzeichnet, dass** in der Dampfleitung (2) vor der Venturidüse (5) ein elektromechanisch betätigbares Ventil (4) angeordnet ist, welches mit der Steuerungseinrichtung (13) verbunden ist, wobei das Ventil (4) den Ausgang des Dampferzeugers (1) im stromlosen Ausgangszustand abzusperren und gleichzeitig die Dampfleitung (2) mit der Atmosphäre zu verbinden bestimmt ist.

2. Vorrichtung nach Anspruch 1, **dadurch gekennzeichnet, dass** die Vorrichtung eine fremdbetätigte Schliesseinrichtung (8) zum Verschliessen der Luftzufuhröffnung (6) umfasst, wobei die Steuerungseinrichtung (13) die Schliesseinrichtung (8) in Abhängigkeit der Betriebsart und/oder der gemessenen Milchtemperatur betätigt.

3. Vorrichtung nach Anspruch 2, **dadurch gekennzeichnet, dass** die Schliesseinrichtung (8) elektromagnetisch betätigbar ist.

4. Vorrichtung nach einem der vorhergehenden Ansprüche, **dadurch gekennzeichnet, dass** die Steuerungseinrichtung (13) die Schliesseinrichtung (8) derart steuert, dass die Luftzufuhröffnung (6) beim Erzeugen von heisser Milch verschlossen ist.

5. Vorrichtung nach einem der Ansprüche 2 bis 4, **dadurch gekennzeichnet, dass** die Steuerungseinrichtung (13) die Schliesseinrichtung (8) derart ansteuert, dass die Luftzufuhröffnung (6) beim Erzeugen von Milchschaum am Anfang des Schäumvorgangs verschlossen ist, um nach dem Erreichen einer vorbestimmten Milchtemperatur die Luftzufuhröffnung (6) zu öffnen.

6. Vorrichtung nach einem der Ansprüche 2 bis 5, **dadurch gekennzeichnet, dass** die Schliesseinrichtung (8) ein federbelastetes Verschlusselement (9) zum Verschliessen der Luftzufuhröffnung (6) aufweist, wobei das Verschlusselement (9) in der aktiven Wirkstellung die Luftzufuhröffnung (6) zu verschliessen bestimmt ist, während es in der nicht aktiven Ruhestellung unter der Wirkung der Federkraft die Luftzufuhröffnung (6) freigibt.

7. Vorrichtung nach einem der vorhergehenden Ansprüche, **dadurch gekennzeichnet, dass** der Temperatursensor (11) im Bereich des vorderen Endes des Dampfrohrs (3) angeordnet ist.

8. Vorrichtung nach einem der vorhergehenden Ansprüche, **dadurch gekennzeichnet, dass** der Temperatursensor (11) das Dampfrohr (3) in axialer Richtung überragt.

9. Vorrichtung nach einem der vorhergehenden Ansprüche, **dadurch gekennzeichnet, dass** das Dampfrohr (3) mit einem endseitigen Düsenkörper (12) versehen ist, über welchen der Dampf unter einem Winkel zur Längsachse (L) des Dampfrohrs (3) austreten kann.

10. Vorrichtung nach Anspruch 9, **dadurch gekennzeichnet, dass** die Längsachse des Temperatursensors (11) koaxial zur Längsachse (L) des Dampfrohrs (3) angeordnet ist und der Düsenkörper (12) zum Fixieren des Temperatursensors (11) ausgebildet ist.

11. Verfahren zum Aufschäumen von Milch unter Verwendung einer Vorrichtung gemäss einem der vorhergehenden Ansprüche, **dadurch gekennzeichnet, dass** die Milch bei geschlossener Luftzufuhröffnung (6) mittels über die Dampfleitung (2) zugeführten Dampfs auf eine vorbestimmte Mindesttemperatur erhitzt und bei Erreichen dieser Temperatur die Luftzufuhröffnung (6) geöffnet und der Aufschäumvorgang danach mittels mit Luft versetztem Dampf weitergeführt wird, wobei der Aufschäumvorgang bei Erreichen einer vorbestimmten Temperatur beendet wird, indem indem das Ventil (4) über die Steuerungseinrichtung (13) geschlossen und die Dampfleitung (2) zu der Atmosphäre hin geöffnet wird.

12. Verfahren zum Erhitzen von Milch unter Verwendung einer Vorrichtung gemäss einem der Ansprüche 1 bis 10, **dadurch gekennzeichnet, dass** die Milch bei geschlossener Luftzufuhröffnung (6) mittels über die Dampfleitung (2) zugeführten Dampfs auf eine vorbestimmte Solltemperatur erhitzt und bei Erreichen dieser Temperatur der Erwärmungsvorgang beendet wird, indem das Ventil (4) über die Steuerungseinrichtung (13) geschlossen und die Dampfleitung (2) zu der Atmosphäre hin geöffnet wird.

13. Kaffeemaschine mit einer nach einem der Ansprüche 1 bis 10 ausgebildeten Vorrichtung, **dadurch gekennzeichnet, dass** das Dampfrohr (3) schwenkbar und/oder höhenverstellbar an der Kaffeemaschine angeordnet ist.

## Claims

1. A device for frothing and heating milk, comprising a steamer (1), a steam pipe (3) connected to the steamer (1) via a steam conduit (2) to be immersed in the milk, a temperature sensor (11) disposed on the steam pipe (3) for measuring the milk temperature and a controller (13) connected to the temperature sensor (11), a venturi nozzle (5) being disposed in the steam conduit (2), which nozzle is provided with an air supply opening (6) that can be closed selectively by means of the controller (13), **characterised in that** there is disposed in the steam conduit (2) upstream of the venturi nozzle (5) an electromechanically actuatable valve (4) which is connected to the controller (13), the valve (4) being intended to block off the output of the steamer (1) in the power-off output state and at the same time to connect the steam conduit (2) to the atmosphere.

2. The device according to Claim 1, **characterised in that** the device comprises an externally activated closure means (8) for closing the air supply opening (6), the controller (13) actuating the closure means (8) dependently upon the mode of operation and/or the milk temperature that is measured.

3. The device according to Claim 2, **characterised in that** the closure means (8) can be actuated electromagnetically.

4. The device according to any of the preceding claims, **characterised in that** the controller (13) controls the closure means (8) such that the air supply opening (6) is closed when hot milk is produced.

5. The device according to any of Claims 2 to 4, **characterised in that** the controller (13) activates the closure means (8) such that the air supply opening (6) is closed when producing milk froth at the start of the frothing process, so as then to open the air supply opening (6) after achieving a pre-defined milk temperature.

6. The device according to any of Claims 2 to 5, **characterised in that** the closure means (8) has a spring-loaded closure element (9) for closing the air supply opening (6), the closure element (9) being intended to close the air supply opening (6) in the active operating position, while it clears the air supply opening (6) in the non-active rest position by the effect of spring force.

7. The device according to any of the preceding claims, **characterised in that** the temperature sensor (11) is disposed in the region of the front end of the steam pipe (3).

8. The device according to any of the preceding claims, **characterised in that** the temperature sensor (11) protrudes beyond the steam pipe (3) in the axial direction.

9. The device according to any of the preceding claims, **characterised in that** the steam pipe (3) is provided with a nozzle member (12) at one end via which the steam can pass out at an angle to the longitudinal axis (L) of the steam pipe (3).

10. The device according to Claim 9, **characterised in that** the longitudinal axis of the temperature sensor (11) is disposed coaxially to the longitudinal axis (L) of the steam pipe (3) and the nozzle member (12) is designed for fixing the temperature sensor (11).

11. A method for frothing milk using a device according to any of the preceding claims, **characterised in that** the milk is heated to a pre-defined minimum temperature with the air supply opening (6) closed by means of steam supplied via the steam conduit (2), and upon reaching this temperature the air supply opening (6) is opened and the frothing process is then continued by means of steam displaced by air, the frothing process being ended upon reaching a pre-defined temperature by the valve (4) being closed by the controller (13) and the steam conduit (2) being opened to the atmosphere.

12. A method for heating milk using a device according to any of Claims 1 to 10, **characterised in that** with the air supply opening (6) closed, the milk is heated by means of steam supplied via the steam conduit (2) to a pre-defined target temperature, and upon reaching this temperature the heating process is ended by the valve (4) being closed by the controller (13) and the steam conduit (2) being opened to the atmosphere.

13. A coffee machine with a device designed according to any of Claims 1 to 10, **characterised in that** the steam pipe (3) is disposed pivotally and/or height-adjustably on the coffee machine.

## Revendications

1. Dispositif servant à faire mousser et chauffer du lait, avec un générateur de vapeur (1), un tuyau de vapeur (3) relié au générateur de vapeur (1) par l'intermédiaire d'une conduite de vapeur (2), destiné à être plongé dans le lait, un capteur de température (11) disposé au niveau du tuyau de vapeur (3), servant à mesurer la température du lait et un système de commande (13) relié au capteur de température (11), dans lequel est disposée dans la conduite de vapeur (2) une buse venturi (5), qui est pourvue d'une ouverture d'amenée d'air (6) pouvant être fermée de manière sélective au moyen du système de commande (13), **caractérisé en ce qu'**est disposée, dans la conduite de vapeur (2), avant la buse venturi (5), une soupape (4) pouvant être actionnée de manière électromécanique, qui est reliée au système de commande (13), dans lequel la soupape (4) se destine à obstruer la sortie du générateur de vapeur (1) dans l'état de sortie sans courant et dans le même temps à relier la conduite de vapeur (2) à l'atmosphère.

2. Dispositif selon la revendication 1, **caractérisé en ce que** le dispositif comprend un système de fermeture (8) actionné depuis l'extérieur servant à fermer l'ouverture d'amenée d'air (6), dans lequel le système de commande (13) actionne le système de fermeture (8) en fonction du mode de fonctionnement et/ou de la température du lait mesurée.

3. Dispositif selon la revendication 2, **caractérisé en ce que** le système de fermeture (8) peut être actionné de manière électromagnétique.

4. Dispositif selon l'une quelconque des revendications précédentes, **caractérisé en ce que** le système de commande (13) commande le système de fermeture (8) de telle manière que l'ouverture d'amenée d'air (6) est fermée lors de la génération de lait très chaud.

5. Dispositif selon l'une quelconque des revendications 2 à 4, **caractérisé en ce que** le système de commande (13) commande le système de fermeture (8) de telle manière que l'ouverture d'amenée d'air (6) est fermée au début de l'opération de moussage lors de la génération de mousse de lait afin d'ouvrir l'ouverture d'amenée d'air (6) une fois une température de lait prédéfinie atteinte.

6. Dispositif selon l'une quelconque des revendications 2 à 5, **caractérisé en ce que** le système de fermeture (8) présente un élément de fermeture (9) soumis à la charge d'un ressort servant à fermer l'ouverture d'amenée d'air (6), dans lequel l'élément de fermeture (9) se destine à fermer, dans la position fonctionnelle active, l'ouverture d'amenée d'air (6), tandis qu'il dégage l'ouverture d'amenée d'air (6) dans la position de repos non active sous l'action de la force de ressort.

7. Dispositif selon l'une quelconque des revendications précédentes, **caractérisé en ce que** le capteur de température (11) est disposé dans la zone de l'extrémité avant du tuyau de vapeur (3).

8. Dispositif selon l'une quelconque des revendications précédentes, **caractérisé en ce que** le capteur de température (11) dépasse du tuyau de vapeur (3) dans une direction axiale.

9. Dispositif selon l'une quelconque des revendications précédentes, **caractérisé en ce que** le tuyau de vapeur (3) est pourvu d'un corps de buse (12) situé côté extrémité, par l'intermédiaire duquel la vapeur peut sortir selon un angle donné par rapport à l'axe longitudinal (L) du tuyau de vapeur (3).

10. Dispositif selon la revendication 9, **caractérisé en ce que** l'axe longitudinal du capteur de température (11) est disposé de manière coaxiale par rapport à l'axe longitudinal (L) du tuyau de vapeur (3), et le corps de buse (12) est réalisé afin de fixer le capteur de température (11).

11. Procédé servant à faire mousser du lait en utilisant un dispositif selon l'une quelconque des revendications précédentes, **caractérisé en ce que** le lait est chauffé, lorsque l'ouverture d'amenée d'air (6) est fermée, au moyen de vapeur amenée par l'intermédiaire de la conduite de vapeur (2) à une température minimale prédéfinie, et une fois ladite température atteinte, l'ouverture d'amenée d'air (6) est ouverte, et l'opération de moussage se poursuit après au moyen de vapeur mélangée à l'air, dans lequel l'opération de moussage est terminée une fois une température prédéfinie atteinte par le fait que la soupape (4) est fermée par l'intermédiaire du système de commande (13) et que la conduite de vapeur (2) est ouverte en direction de l'atmosphère.

12. Procédé servant à chauffer du lait en utilisant un dispositif selon l'une quelconque des revendications 1 à 10, **caractérisé en ce que** le lait est chauffé, lorsque l'ouverture d'amenée d'air (6) est fermée, au moyen de vapeur amenée par l'intermédiaire de la conduite de vapeur (2) à une température de consigne prédéfinie, et l'opération de réchauffage est terminée une fois ladite température atteinte par le fait que la soupape (4) est fermée par l'intermédiaire du système de fermeture (13) et que la conduite de vapeur (2) est ouverte en direction de l'atmosphère.

13. Machine à café avec un dispositif réalisé selon l'une quelconque des revendications 1 à 10, **caractérisée en ce que** le tuyau de vapeur (3) est disposé de manière à pouvoir pivoter et/ou de manière réglage en hauteur au niveau de la machine à café.
